# EUROPEAN PATENT SPECIFICATION

(11) **EP 1 830 607 B1**
(45) Date of publication and mention of the grant of the patent: **18.08.2010**
(21) Application number: 07250907.8
(22) Date of filing: 05.03.2007
(51) Int. Cl.: H05B 33/08

(54) **Lighting and systems for controlling lighting**
Beleuchtung und Systeme zur Beleuchtungssteuerung
Eclairage et systèmes de contrôle de l'éclairage

(30) Priority: 03.03.2006 GB 0604239; 03.11.2006 GB 0621917
(43) Date of publication of application: 05.09.2007
(73) Proprietor: Actia (UK) Limited, Newtown Powys SY16 4LE (GB)
(72) Inventor: Terry, Richard Peter, Newtown, Powys SY16 4LE (GB); Kay, Christopher Paul, Newtown, Powys SY16 4LE (GB)
(74) Representative: Matthews, Paul

(56) References cited:
- EP-A- 1 324 641
- WO-A-2006/012633
- US-A- 5 563 472
- US-A1- 2002 140 380
- US-A1- 2005 062 481

## Description

This invention concerns lighting and systems for controlling lighting. The invention has particular application to vehicle lighting comprising LED lamps.

Vehicle trailers conventionally comprise rear lighting clusters for signalling. The lighting cluster typically consists of a set of filament bulbs enclosed in translucent coloured or clear plastic housings. These signalling lights include directional indicators for indicating the intention of the driver to turn the vehicle left or right, To meet road safety requirements, it is mandatory to provide in the cabin of the towing vehicle (tractor unit) a lamp that acts to inform the driver of failure of the directional indicators during activation of the directional indicator (typically termed a tell-tale lamp). Accordingly, lighting circuits of vehicles that control illumination of the lamps of the lighting cluster include, for example, simple electro-mechanical systems, electronic flasher units or multiplexed electronic control units (ECUs) that periodically test the filament bulb of the directional indicators for failure.

Furthermore, the lighting circuits of tractor units often determine the presence of a trailer by sending brief test signals to one or more of the lamps of the trailer lighting cluster. If the test signal fails to detect trailer lighting, the tractor unit will conclude that a trailer is not present and the tractor unit's driveline characteristics, such as the braking system, gear shift mechanism, traction control and ABS, may be set to a suitable operational condition.

It is known to replace each filament bulb of the lighting cluster with a plurality of LEDS or a single LED, referred to hereinafter as a LED lamp. The lighting cluster of LED lamps is more efficient and more reliable than the lighting cluster of filament bulbs. However, due to operational differences between the LED lamps and filament bulbs, often the LED lamps are not compatible with vehicle lighting circuits, which can result in incorrect operation of the trailer lighting and tractor unit.

One specific problem is that the vehicle lighting circuit can fail to correctly determine whether or not the directional indicator LED lamp has failed. This can result in activation of the tell-tale lamp to indicate failure of the directional indicator when the directional indicator LED lamp is working or failure to activate the tell-tale lamp when the directional indicator LED lamp has failed. Accordingly, use of LED lamps can result in the vehicle failing to meet mandatory requirements for road use.

A further problem is that test signals sent to a lighting cluster to determine the presence of a trailer expect to detect an impedance comparable to a filament bulb if the trailer is present. However, LEDs have much higher impedance than filament bulbs as a result of which the test signals can fail to detect the LED lamp. This may result in the tractor unit setting its driveline characteristics suitable for the absence of a trailer despite the fact a trailer is present. Such incorrect setting of the driveline characteristics of the tractor unit can result in the vehicle being unsafe, ultimately endangering the driver and other road users.

LED lighting clusters having integral control circuitry have been developed that are compatible with the lighting circuits in specific makes of vehicles. However, these LED lighting clusters do not operate correctly with other vehicle makes because different testing methods are used in these vehicles. Accordingly, current LED lighting clusters are not universally compatible with all vehicles. Furthermore, extra LED lamps and/or LED lighting clusters not having integral control circuitry cannot be accommodated because the control circuitry cannot cope with LED lamps having unknown operational characteristics.

Making a LED lighting cluster/control circuitry that is universally compatible with all different types of vehicle lighting circuits and LED lamps is a significant problem, which is aggravated by the fact that vehicle manufacturers are unwilling to disclose details of the vehicle lighting circuits.

WO 2006/012633, US2005/0062481, EP1324641 and US 2003/0227257 A1 disclose circuits for controlling LED lamps.

According to a first aspect of the invention, there is provided a system according to claim 1.

According to a second aspect of the invention, there is provided vehicle lighting according to claim 2.

By presenting a load in parallel with the LED lamp, when the LED lamp has not failed, the vehicle lighting draws a current comparable to a filament bulb. However, on failure of the LED lamp, an open circuit is presented to the vehicle lighting circuit. In this way, the vehicle lighting according to the invention simulates a filament bulb, which, when operational, presents a load to the lighting circuit and, on failure, presents an open circuit. However, the vehicle lighting benefits from the advantages of LEDs in that LEDs are more efficient and reliable than a filament bulb. Accordingly, the vehicle lighting according to the invention operates satisfactorily with the lighting circuits of many vehicles because its functional characteristics are similar to that of vehicle lighting comprising filament bulbs.

Failure of the LED lamp may be when any one of the LEDs of the lamp fail. This may be because the LEDs are connected in series and failure of the LED causes a break in the circuit. Alternatively, the LEDs may be connected in parallel and, even though failure of one LED does not result in a break in the circuit, the lamp may still be considered to have failed, for example, because of the reduction in light intensity resulting from the failure of the LED.

In another embodiment, failure of a single LED may not constitute failure of the LED lamp. Failure of the LED lamp may be when two or more LEDs of the lamp fail. For example, the light intensity provided by the LED lamp may drop below a minimum threshold level only after two or more LEDs have failed. Alternatively, the current supplied to the remaining working LEDs may be increased to increase the intensity of light emitted by these LEDs to compensate for the failed LED(s).

The LEDs of the lamp may be grouped together into multiple groups. Each group may be equivalent in terms of light intensity to a single filament bulb. On detection of failure of one of the LEDs of a group, all LEDs in that group may be deactivated (not activated) to simulate complete failure of a filament bulb. In this condition, the lamp (as a whole) is considered to only have partially failed, and the LED lamp may remain partially operative with at least some of the groups of LEDs being activated when an activation signal is received from the vehicle lighting circuit.

In one arrangement, two or more drive signals are used to activate the LEDs, each drive signal activating a group of LEDs. This allows independent activation of the LED groups, which is required if the LED lamp is to be driven when the LED lamp is partially operative.

The LED lamp may comprise parallel strings of LEDs. A group of LEDs may comprise one or more LED strings. Detection of failure of the lamp may comprise detecting failure of one or more of the LED strings.

It will be understood that the term "open circuit" used herein means that the circuit has high impedance that is significantly greater than its impedance during normal operation. This includes, but is not limited to, a break in the circuit. Typically, a high impedance is above 10000 ohms.

The latching circuit is desirable to ensure that there is minimum delay between the vehicle lighting receiving an activation signal from the vehicle lighting circuit to illuminate the LED lamp and the provision of the open circuit when it has already been determined that the LED lamp has failed. Relying solely on the detection means to determine whether the LED lamp has failed every time an activation signal is received to switch on the LED lamp will inevitably result in a delay between receiving the signal and the provision of an open circuit. During this time, the vehicle lighting circuit may test the LED lamp and determine incorrectly that the LED lamp is functioning properly, resulting in the tell-tale lamp being deactivated. Reducing the delay between receiving the activation signal and providing an open circuit reduces/eliminates the possibility that the vehicle lighting circuit incorrectly determines that the LED lamp has not failed.

The advantages of a latching circuit is that the recorded state is maintained even when the latching circuit is powered by an intermittent power source, such as the signals from the vehicle lighting circuit, and the reaction time of the latching circuit is substantially instantaneous. In this way, any delay between receiving a signal from the lighting circuit and providing an open circuit (disconnecting the LED lamp and load) is eliminated. This overcomes the problem that certain vehicles send test signals during the initial part of the activation signal, requiring the vehicle lighting to instantaneously provide an open circuit when the lamp has failed. Any delay can result in the vehicle lighting circuit incorrectly determining that the LED lamp has not failed. Furthermore, as the latching circuit remains in the state that it was last in during activation even when no power is supplied to the vehicle lighting circuit, the vehicle lighting can be powered solely by the activation signals from the vehicle lighting circuit such that no other power supply is required.

The latching circuit may comprise a latching relay, however, in a preferred embodiment, the switching of the latching circuit is carried out by at least one transistor. The use of a transistor is preferable because transistors are less likely to be affected by vibrations of the vehicle.

Other recording means may be used, such as non-volatile memory, however, these recording means do not have the same reaction time of a latching circuit, tend to be more expansive and can require constant power.

The failure detection means may be a microcontroller that processes status signals received from the LED lamp and, in response to a status signal indicating lamp failure, causes an open circuit to be presented to the vehicle lighting circuit.

The LED lamp may be a directional indicator for a vehicle. The vehicle lighting may be a vehicle lighting cluster comprising a plurality of LED lamps. The vehicle lighting may comprise LED lamps comprising one or more of a fog lamp, reverse indicator lamp, end outline marker (EOM) lamp, side outline marker lamp, stop/brake lamp, tail lamp and directional indicator lamp.

According to a third aspect of the invention there is provided vehicle lighting comprising a LED lamp and a switch for connecting the LED lamp and a load in parallel to a lighting circuit of the vehicle when an activation signal to turn the LED lamp on is received and for disconnecting the LED lamp and connecting the lighting circuit to ground when a diagnostic test signal is received having a lower voltage than the activation signal.

Some vehicles send diagnostic test signals to the vehicle lighting during periods when the vehicle lighting is switched off (i.e. during periods when no activation signal is sent to the vehicle lighting). This test signal does not result in illumination of a filament bulb because of the low current used for the test signal. However, LEDs are much more efficient than filament bulbs and can emit light even when low currents are passed therethrough. Consequently, when the filament bulbs are replaced with LEDs, the test current can cause illumination of the LEDs. The invention avoids this by disconnecting the LED lamp and connecting the lighting circuit to ground when the LED lamp is off. The connection to ground may be through the load.

According to a fourth aspect of the inventions there is provided a system for controlling an LED lamp on a vehicle comprising a switch for connecting the LED lamp and a load in parallel to a lighting circuit of the vehicle when an activation signal to switch the LED lamp on is received and for disconnecting the LED lamp and connecting the lighting circuit to ground when a diagnostic test voltage is received having a lower voltage than the activation signal.

According to a fifth aspect of the invention, there is provided vehicle lighting for attaching to a vehicle, the lighting comprising an LED lamp, wherein the lighting simulates the operational characteristics of a filament lamp in the following manner: -
when the vehicle lighting receives an activation signal to switch the LED lamp on and the LED lamp has not failed, the vehicle lighting draws a current comparable to the current drawn by a filament lamp when switched on,
when a high impedance test signal is received and the LED lamp has not failed, the vehicle lighting presents the lighting circuit of the vehicle with a low impedance path to ground, and
on failure of the LED lamp, the lighting presents the lighting circuit of the vehicle with an open circuit (impedance above 10000 ohms).

According to a sixth aspect of the invention there is provided vehicle lighting comprising an LED lamp and control means for switching the LED lamp on, wherein the control means switches on the LED lamp after receiving a signal for a set period.

By switching on the LED lamp only after the set period, the vehicle lighting distinguishes between test signals, which have a pulse duration shorter than the set period, and activation signals, which have a much longer duration. In this way, the LED lamp is not illuminated by the test signals. The set period is an appropriate time-period longer than the length of a typical test signal. The control means may be adjustable to alter the set period. For example, the control means may be a programmable microprocessor and the length of the set period can be adjusted by re-programming the microprocessor.

The set period is typically of the order of milliseconds and preferably is less than 100ms. This duration for the set period is believed to be adequate for the majority of vehicle types.

The vehicle lighting may be arranged to connect a load through which the signal passes during the set period and disconnect the load after receiving the signal for the set period, In this way, a vehicle lighting circuit testing for the presence of trailer lighting will detect a load, however, the load is removed when the LED lamp is switched on as there is no need to provide low impedance after the brief testing signal. The load may be 28 ohms.

According to a seventh aspect of the invention there is provided control means for controlling a LED lamp on a vehicle, the control means arranged to switch on the LED lamp after receiving a signal for a set period.

According to a eighth embodiment of the invention there is provided a control interface connectable to at least one vehicle LED lamp and a vehicle lighting circuit, the control interface comprising calibration means for making an initial measurement of the power consumed by the LED lamp, an acceptable operational power range being determined from the initial power measurement, and failure detection means being arranged to, during activation of the lamp, measure the power consumed by the LED lamp and to indicate a fault to the lighting circuit if the measured power is outside the operational power range.

The eighth aspect of the invention provides a control interface that allows vehicle LED lamps having unknown operational characteristics to be satisfactorily operated by the vehicle lighting circuits. In particular, the interface carries out a calibration of the LED lamp(s) such that the interface can tell when the LED lamp(s) fails. If the lamp operates within an acceptable operational power range, the interface assumes that the lamp is working and ensures that an appropriate load is presented to the vehicle lighting circuit so that the vehicle lighting circuit operates the lamp correctly. However, when the lamp operates at a power outside the acceptable power range, the interface assumes the lamp has failed and indicates this to the vehicle lighting circuit.

In one arrangement, the failure detection means may connect a load in parallel with the LED lamp to the vehicle lighting circuit when power consumed by the LED lamp is within the operational range and present an open circuit to the vehicle lighting circuit when the power consumed by the LED lamp is outside the operational power range, thereby indicating the fault to the vehicle lighting circuit. In this way, the interface simulates the operational characteristics of a filament bulb. This functionality is important when the LED lamp is a directional indicator, however it may not be necessary to indicate a fault to the vehicle lighting circuit in this way when the LED lamp is not a directional indicator, for example when the LED lamp is a side lamp or stop lamp.

For example, the interface may generate and send a signal to the vehicle lighting circuit or other electronic system of the vehicle indicating failure of the lamp. This signal may be sent via a Controller Area Network (CAN) or Local Interconnect Network (LIN) on the vehicle. The signal may simply indicate lamp failure or may specify a more detailed report on the failure.

The interface may comprise a manually operated input, such as a pushbutton or toggle switch, that, when operated, causes the calibration means to make an initial measurement of power consumed by the lamp. In this arrangement, when the operator changes the lamp, he operates the button or switch to force the interface to recalibrate for the new lamp.

The interface may be arranged to make an initial measurement of power consumed by the lamp each time the interface receives an indication that the lamp has been changed. The indication that the lamp has been changed may be a significant change in measured power consumption of the connected lamp. The significant change in power consumption may be a change from a condition in which the power consumed by the connected lamp is outside the operational power range determined for that lamp to a condition in which the power consumed is within a second power range. In this way, the interface automatically recognises that the lamp has been replaced and recalibrates for the new lamp.

The forced and automatic recalibration can be used in conjunction on a single interface such that the interface automatically recalibrates when a lamp fails and is replaced with another and can also be forced to recalibrate when, for example, working lamps are replaced.

The second power range may be determined from the measured power consumption of another lamp on the vehicle. The interface may be arranged to be connected to one or more pairs of lamps and to determine the second power range from the measured power consumption of the other lamp of the pair. The invention recognises that trailers often comprise lamps of the same type (i.e. left and right directional indicators) and these lamps will often have similar operational characteristics. Furthermore, in all likelihood, the lamps will have to be replaced with a lamp of the same type after failure because the user will be constrained by the type of connectors, housings, etc used for the failed lamp. Therefore, the working lamp of the pair can be used as a reference to determine whether the other lamp of the pair has been replaced with a working lamp after failure.

In an alternative arrangement, the second power range is the operational power range determined for the failed lamp before failure. In this arrangement, the operational power range may be stored in non-volatile memory.

It will be understood that the interface may comprise other features described with respect to the first to seventh aspects for the invention. For example, the interface may comprise a switch for connecting the lamp to the lighting circuit when an activation signal is received from the lighting circuit and for disconnecting the lamp and connecting the lighting circuit to ground when a diagnostic test signal is received having a lower voltage than the activation signal. The interface may be for connecting to two or more lamps and comprise control means for switching one of lamps on after receiving a signal for a set period. In this way, the interface distinguishes between test signals and the activation signal.

The invention will now be described, by example only, with reference to the accompanying drawings, in which: -
**Figure 1** shows a circuit diagram of a control system for controlling a vehicle lighting cluster comprising LED lamps in accordance with the invention;
**Figure 2** shows a circuit diagram of a LED lamp for a directional indicator of the lighting cluster;
**Figure 3** shows a circuit diagram of a LED lamp for a reverse indicator of the lighting cluster;
**Figure 4** shows a circuit diagram of a LED lamp for a stop/brake indicator of the lighting cluster;
**Figure 5** shows a circuit diagram of a LED lamp for a fog light of the lighting cluster;
**Figure 6** shows a circuit diagram of a LED lamp for a side marker light of the lighting cluster;
**Figure 7** shows a microcontroller used in the present invention;
**Figures 8****,** **9 and 10** show flow diagrams of an algorithm carried out by the microcontroller;
**Figure 11** shows a second embodiment of the invention, wherein a trailer interface is provided between the trailer lamps and the vehicle lighting circuit of the tractor unit; and
**Figure 12** shows a flow diagram of an algorithm carried out by the interface of the second embodiment.

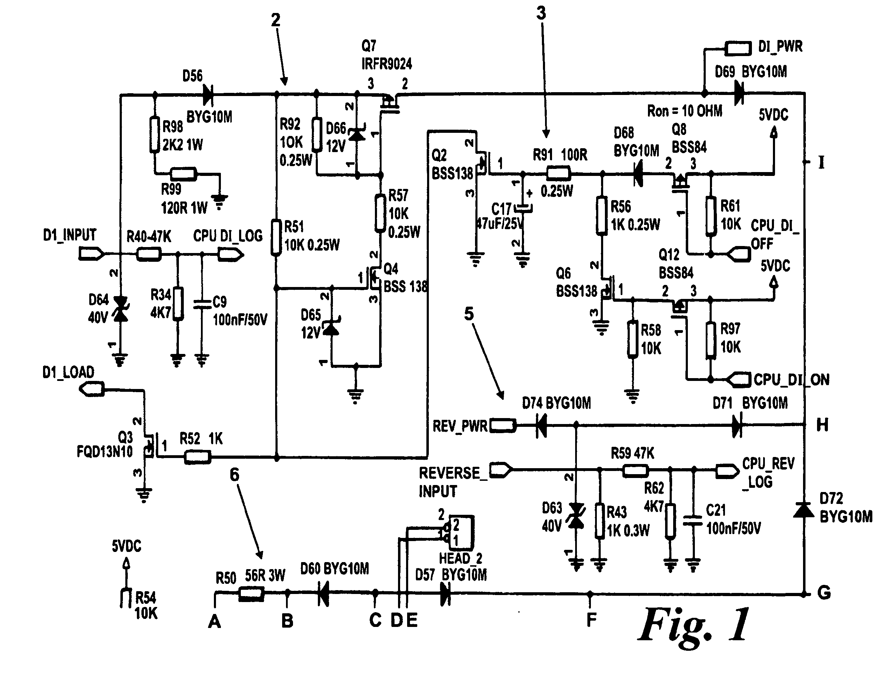

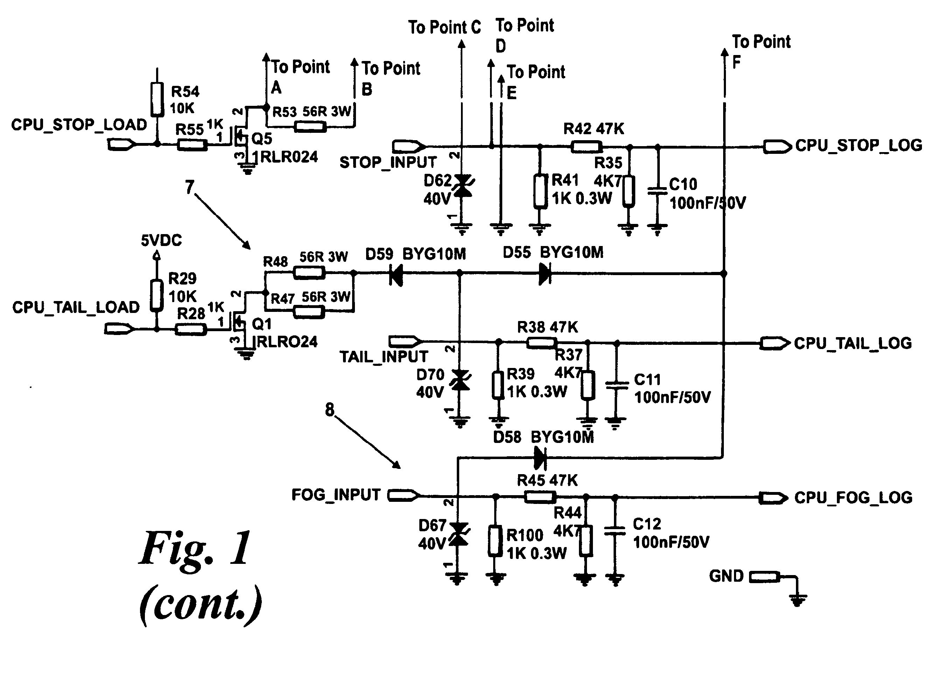

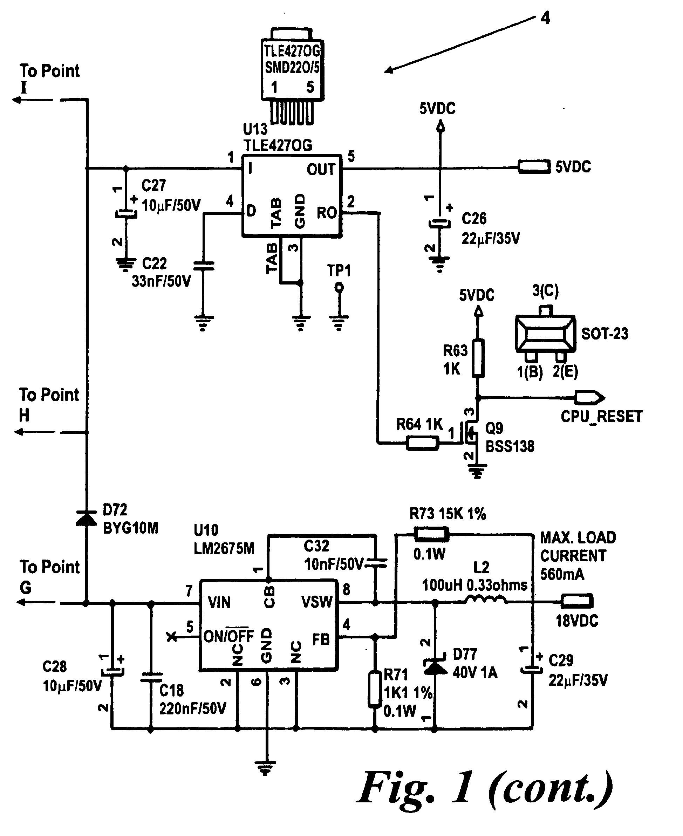

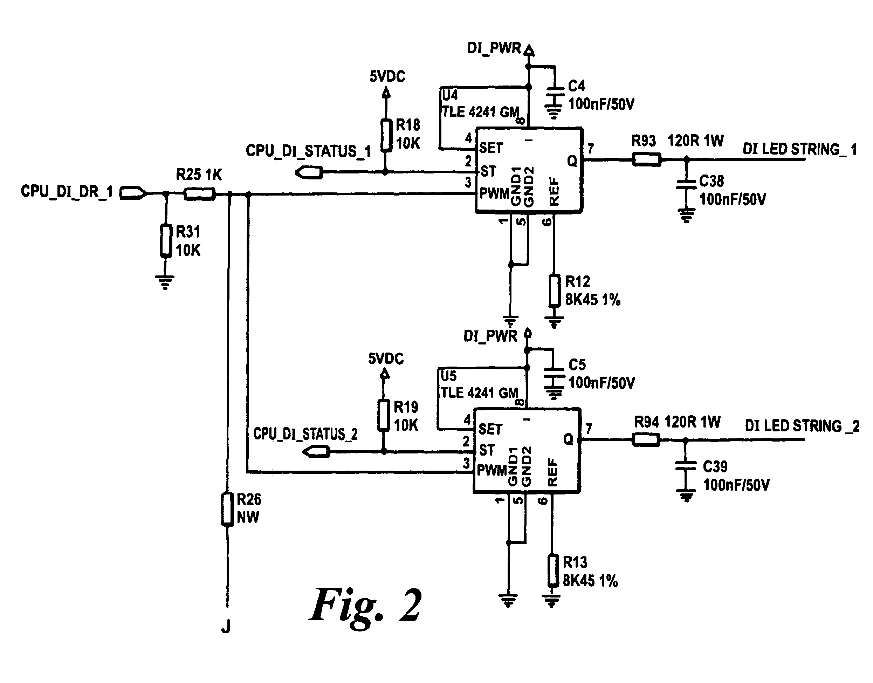

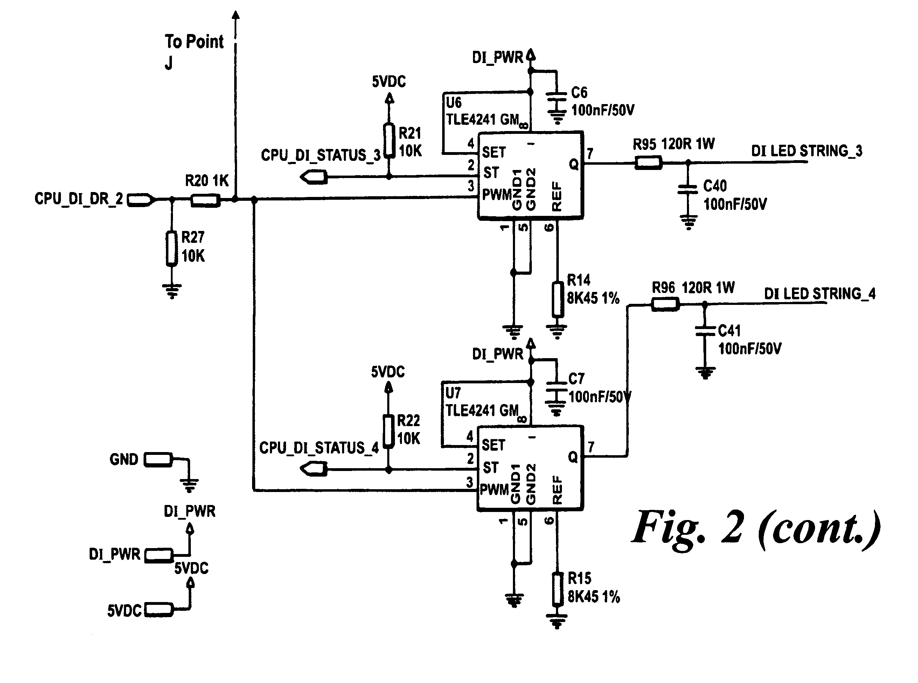

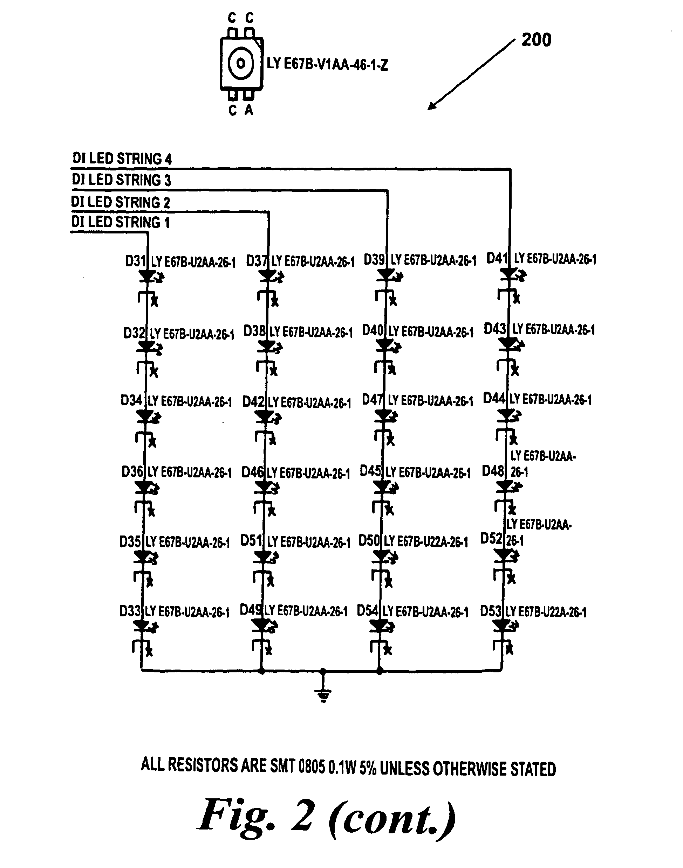

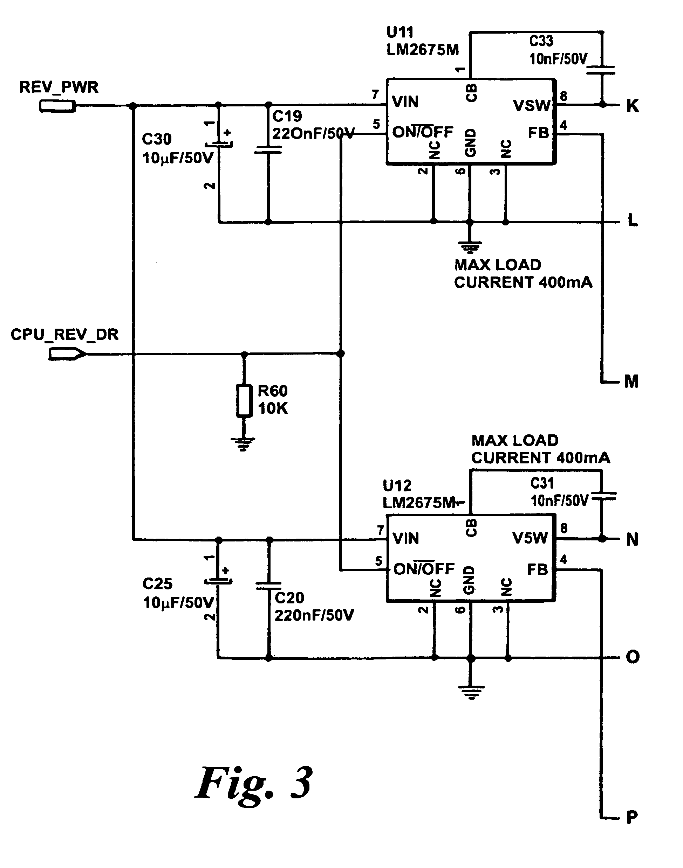

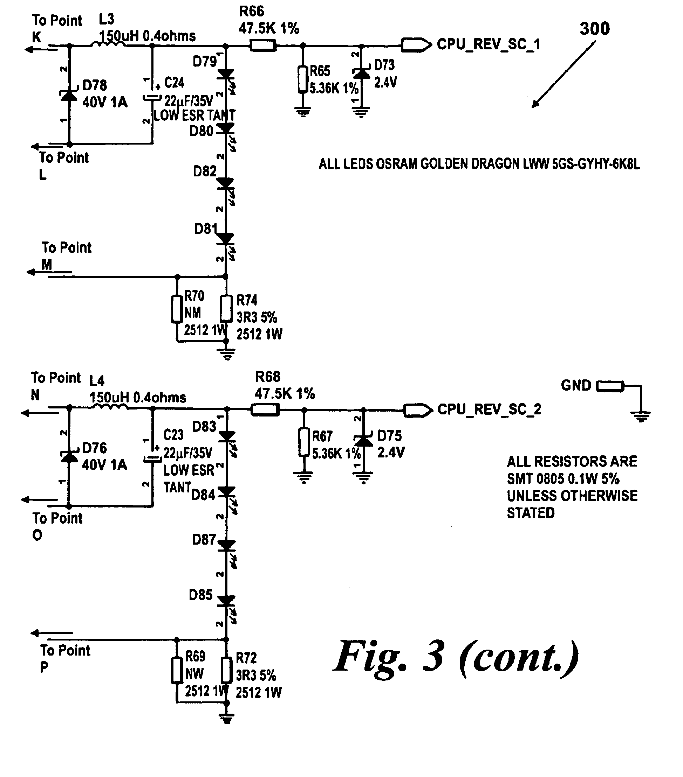

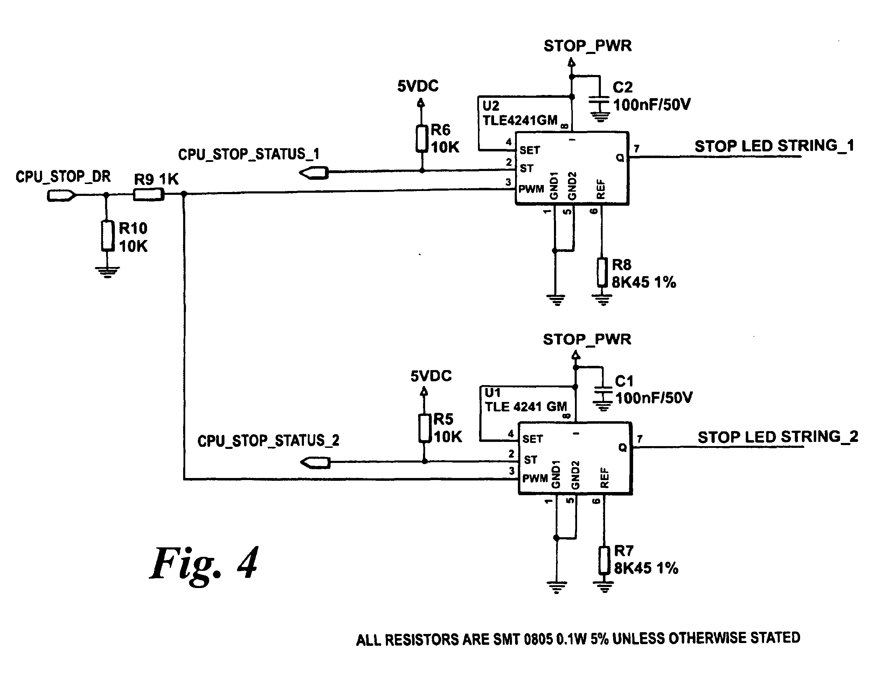

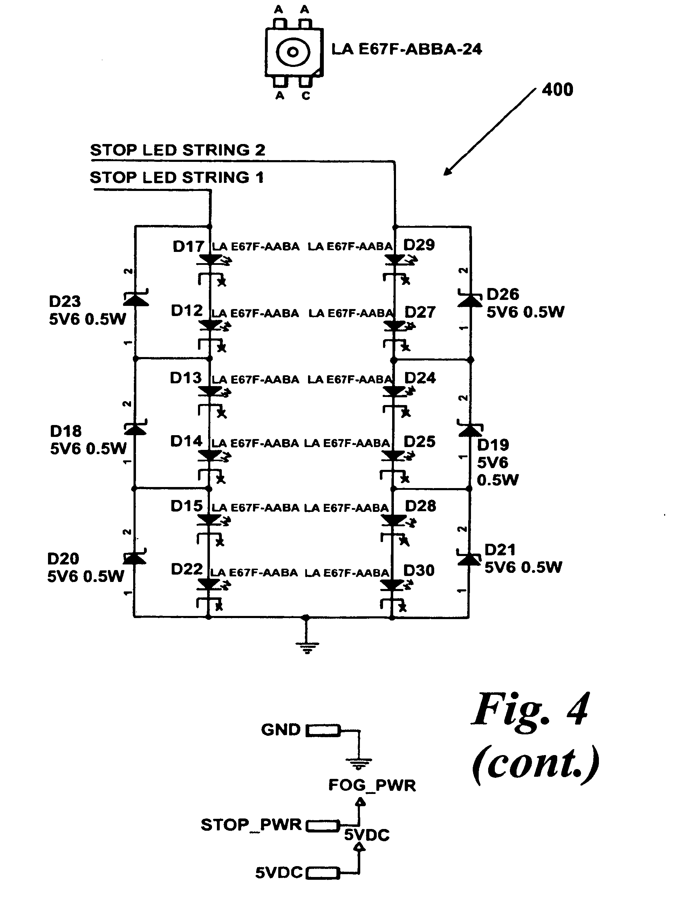

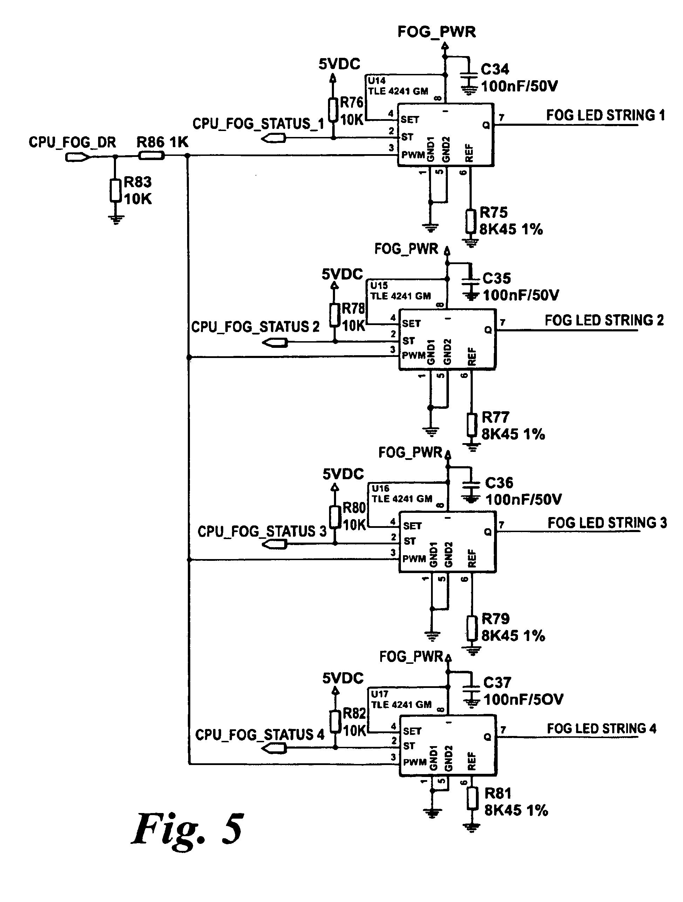

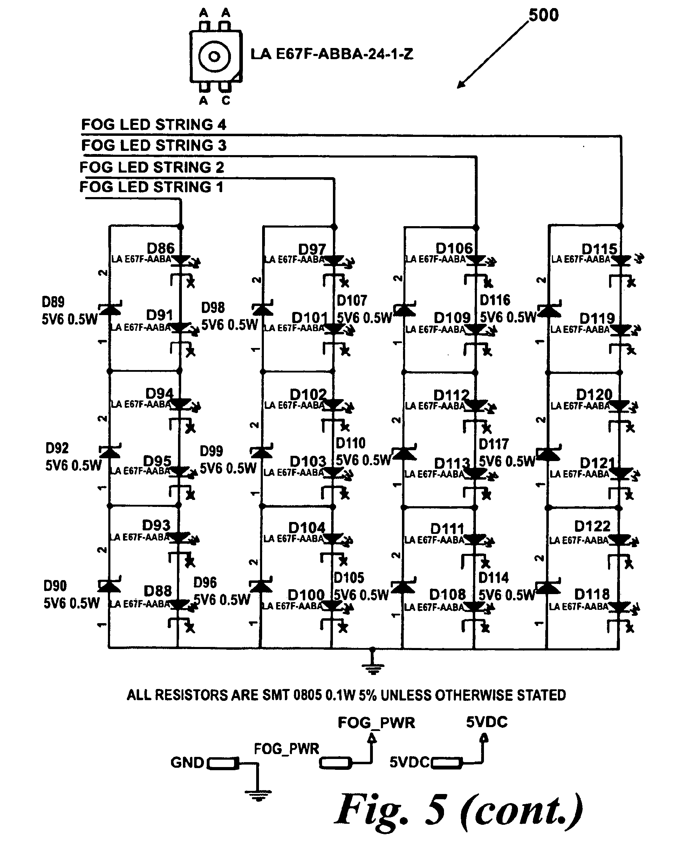

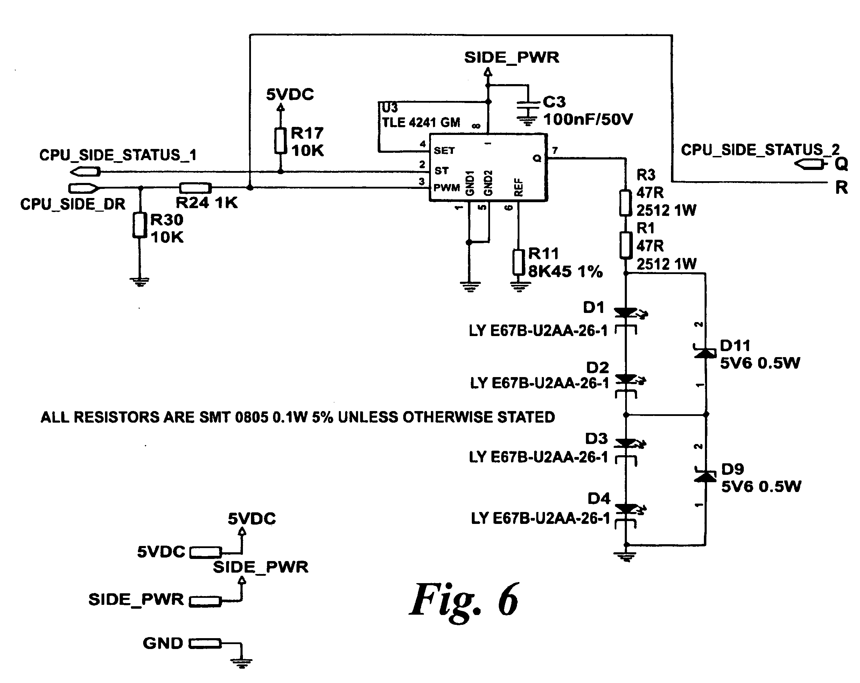

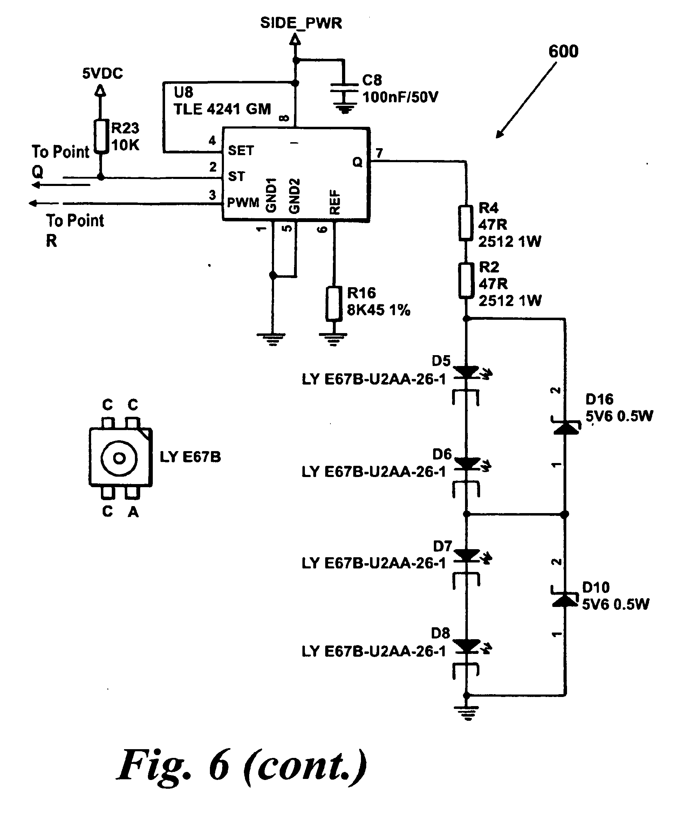

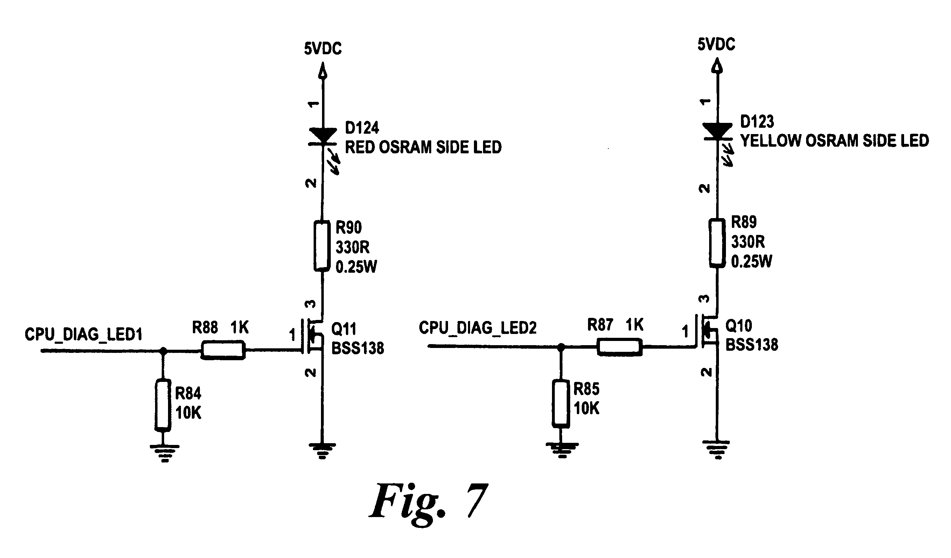

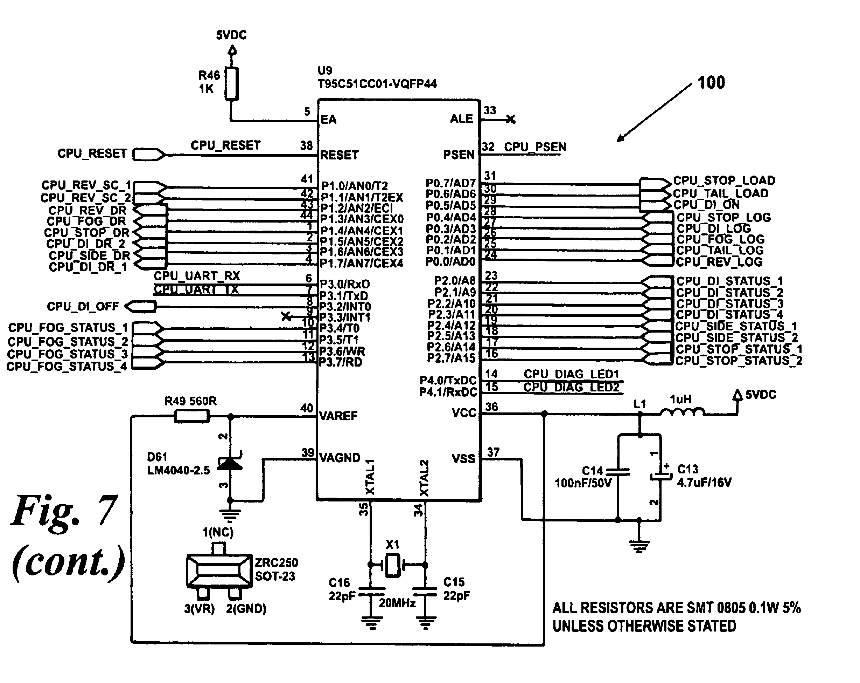

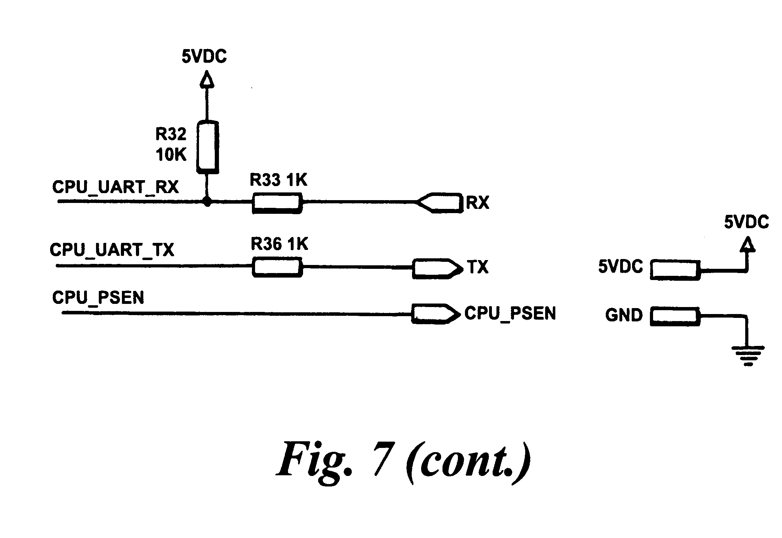

The vehicle lighting cluster shown in the Figures comprises an electronic control system 1, shown in Figures 1 and 7, connected with directional indicator lamp 200, reverse indicator lamp 300, stop/brake indicator lamp 400, fog lamp 500 and side marker lamp 600, shown in Figures 2 to 6. The vehicle lighting cluster can be embodied as a single integral unit for retrofitting to a trailer for operation with the conventional lighting circuit of the trailer. The housing of the lighting unit is typically an aluminium die-casting.

The control system 1 comprises a directional indicator switching circuit 2 for connecting and disconnecting a 25ohm load (not shown), a latching circuit 3 for holding the circuit 2 in an open circuit condition in response to detection of failure of the directional indicator LED lamp 200, a voltage regulating circuit 4, reverse, stop, tail and fog switching circuits 5 to 8 and microcontroller 100. The control system 1 is a PCB located within the aluminium housing with a thermally conductive electrically insulating material between the PCB and the housing. The 25ohm load (not shown) is typically a plate resistor that is attached in a rebate in the aluminium die-casting. In this way, the housing acts as a heat sink for the plate resistor and PCB to prevent overheating.

The directional indicator switching circuit 2 will now be described with reference to Figure 1. DI_INPUT is for connecting to an output of the vehicle lighting such that a directional indicator activation signal from the vehicle lighting circuit is received at DI_INPUT. DI_INPUT is connected to field-effect transistors (FET) Q3, Q4 and Q7 via diode D56 and resistors R51 and R52. The DI_INPUT is also connected to CPU_DI_LOG that transmits the activation signal to microcontroller 100.

FET Q3 switches in the load in parallel to the DI_INPUT in response to the activation signal. FET Q4 is also switched on in response to the activation signal resulting in the switching on of FET Q7. Switching on of FET Q7 feeds the activation signal to DI_PWR for powering the LED lamp 200 and to circuit 4, which regulates voltage powering the microcontroller 100.

Further activation signals for the reverse, stop/brake, tail and fog signalling functions are provided at REVERSE_INPUT, STOP_INPUT, TAIL_INPUT and FOG_INPUT. These activation signals are sent to the microcontroller 100 via CPU_REV_LOG. CPU_STOP_LOG, CPU_TAIL_LOG and CPU_FOG_LOG and power the microcontroller 100 via regulating circuit 4.

The stop and tail switching circuits 6 and 7 have additional resistor loads R50, R53 and R47, R48 respectively that are switched in through FETs Q5 and Q1 when signals CPU_STOP_LOAD and CPU_TAIL_LOAD are set high by the microcontroller 100. When the voltage regulator U13 of circuit 4 is first switched on, the gates of FETs Q5 and Q1 are pulled high, switching in the resistor loads R50, R53 and R47, R48. It is only once the microcontroller 100 has initialised that these loads are switched out of the circuit, if required. It will be understood, however, that in an alternative embodiment, the gates of FETs Q5 and Q1 may be initially maintained low and are only switched on in response to signals from the microcontroller 100.

The circuit 4 comprises 5V voltage regulator U13 that supplies power to the microcontroller 100 and to hold the lines carrying the status signals at 5V. Use of voltage regulator U13 ensures that an appropriate and steady voltage is supplied to the microcontroller 100.

The stop, fog and side marker lamps 400, 500 and 600 are supplied with power through 18V voltage regulator U10. An intermediate voltage of 18V is chosen to minimise power dissipation within the current sources of the lamps, while allowing full voltage compliance with the maximum LED forward voltage. The direction indicators however, operate on a 50% duty cycle and hence the power dissipation in the current source is also reduced by 50%, as a result the current sources are driven directly from the activation signal. Due to the high power requirements for the reverse lamp, each LED string of the reverse lamp is allocated its own current source implemented using switching regulator technology to minimise power dissipation within the regulation circuits.

The directional indicator LED lamp 200 will now be described with reference to Figure 2. LED lamp 200 comprises a plurality of LEDs arranged in parallel strings 1 to 4. Current sources U4 to U7 are provided, each for powering a respective LED string 1 to 4 in response to a drive signals CPU_DI_DR_1 and CPU_DI_DR_2 sent from the microcontroller 100. LED strings 1 and 2 form one group activated in response to signal CPU_DI_DR_1 and LED strings 3 and 4 form another group activated in response to signal CPU_DI_DR_2.

The LED lamp 200 of this embodiment is considered to have failed if any one of the LED strings fails. Accordingly, as discussed below with respect to the microcontroller 100, either both drive signals CPU_DI_DR_1 and CPU_DI_DR_2 are sent to the LED lamp 200 or neither of the signals are sent to the LED lamp 200. However, it will be understood that failure of one of the LED strings may be considered only partial failure of the LED lamp 200 and a pair of LED strings 1 and 2 or 3 and 4 may still be activated when a string of the other pair of LED strings has failed. The embodiment of the control system 1 shown in the Figures does not allow this function, however by providing an LED lamp 200 with separate inputs CPU_Dr_D1 and CPU_DI_DR_2 for each pair of LED strings, the LED lamp 200 is suitable for use with a control system that does enable this function. This is advantageous where the LED lamp 200 and control system 1 are provided as separate units for fitting to a vehicle, as the LED lamp 200 can be retained if the control system 1 is replaced with a control system that does allow partial failure of the LED lamp 200.

The current sources U4 to U7 also return a status signal, CPU_DI_STATUS 1 to CPU_DI_STATUS_4 for the associated LED string to the microcontroller 100. If an LED fails, resulting in an open circuit in one of the strings, the status signal CPU_DI_STATUS 1 to CPU_DI_STATUS_4 corresponding to that LED string goes low signalling to the microcontroller 100 that the LED lamp 200 has failed.

The reverse lamp 300 differs from the directional indicator lamp 200 in that is consists of only two strings of LEDs. The current sources U11 and U12 return status signals CPU_REV_SC_1 and CPU_REV_SC_2 to the microcontroller 100.

The stop and fog lamps 400 and 500 operate in a similar manner. The stop lamp 400 comprises two LED strings, each controlled by independent current sources U1 and U2, whereas the fog lamp 500 comprises four LED strings, each controlled by independent current sources U14 to U17. Both the LED strings of the stop lamp 400 and the LED strings of the fog lamp 500 comprise additional zener diodes, each connected in parallel with a pair of LEDs in a string. The zener diodes maintain the electrical circuit to the other pairs of LEDs of a string if a LED was to fail in any particular pair within that string. In this way, only a pair of LEDs is lost in any string if an LED in the string fails. If all pairs within a string fail, the associated current source returns a high status signal to the microcontroller 100.

The side marker lamp 600 comprises two strings of LEDs controlled by current sources U3 and U8. As with the stop lamp 400 and fog lamp 500, zener diodes D9, D10, D11 and D16 are each placed in parallel with a pair of the LEDs such that only a pair of LEDs is lost if one of the LEDs of a string fails.

As can be seen in Figure 7, the microcontroller 100 receives activation signals for each lamp function via CPU_DI_LOG, CPU_REV_LOG, CPU_STOP_LOG, CPU_FOG_LOG and CPU_TAIL_LOG. The microcontroller 100 also receives status signals CPU_DI_STATUS_1 to CPU_DI_STATUS_4. CPU_FOG_STATUS_1 to CPU_FOG_STATUS_4. CPU_STOP_STATUS_1, CPU_STOP_STATUS_2, CPU_REV_SC_1 and CPU_REV_SC_2 from the current sources of the respective lamps 200 to 600. The microcontroller 100 controls the voltage level of CPU_DI_DR_1, CPU_DI_DR_2, CPU_REV_DR, CPU_FOG_DR, CPU_STOP_DR, CPU_DI_OFF, CPU_DI_ON. CPU_STOP_LOAD and CPU_TAIL_LOAD.

The microcontroller 100 may also operate diagnostic LEDs D124 and D123, shown in Figure 7, via CPU_DIAG_LED1 and CPU_DIAG_LED2. These LEDs can be used to signal that a lamp 200, 300, 400, 500 or 600 has failed when the failed lamp function in the vehicle cabin is not energised, when power is applied to the cluster from any of the vehicle lighting circuits. These diagnostic LEDs D124 and D123 allow a driver to switch on the side lights of the vehicle and then go to the rear of the vehicle to check the diagnostic LEDs to determine if the lighting cluster is working. Previously, to check a lighting cluster was working, either two people were required, one to operate the lights while the other stands at the rear of the vehicle to confirm correct operation or the vehicle had to be parked in front of a mirror, for example at a truck depot, and the driver observe operation of the lights through the mirror.

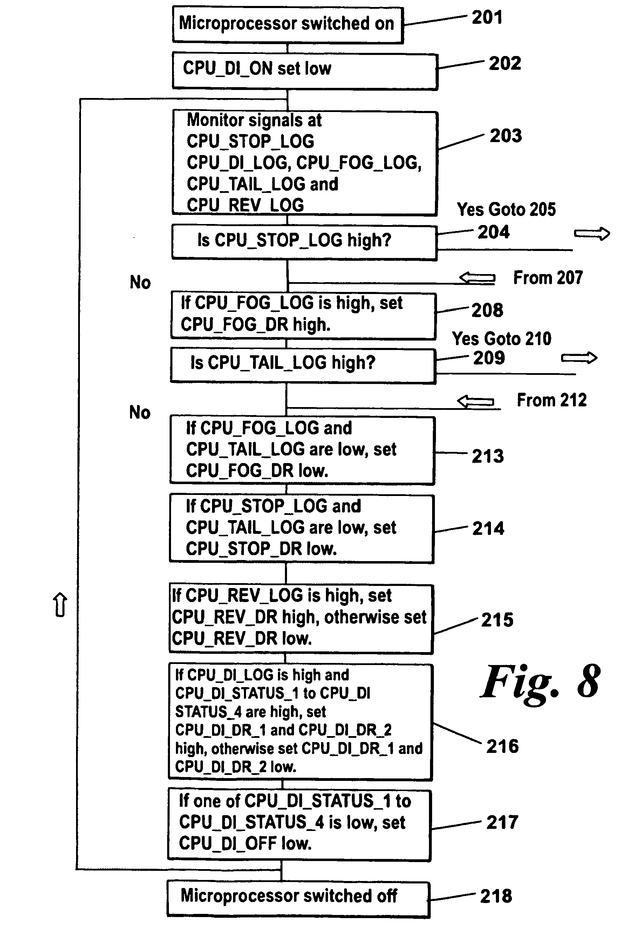

The microcontroller 100 is programmed with software that operates according to the algorithm shown in Figures 8 to 10. The microcontroller 100 operates using Boolean logic either setting an output voltage high or low.

The microcontroller is switched on by the voltage regulator U13. At step 202, the microcontroller 100 initialises setting CPU_DI_ON low to reset the latching circuit 3 (as described in more detail below). The microcontroller 100 then monitors at step 203 CPU_DI_LOG, CPU_REV_LOG, CPU_STOP_LOG. CPU_FOG_LOG and CPU_TAIL_LOG to determine which one of these signals is set high due to the presence of an activation signal (an activation signal must be present for power to be supplied to the microcontroller 100).

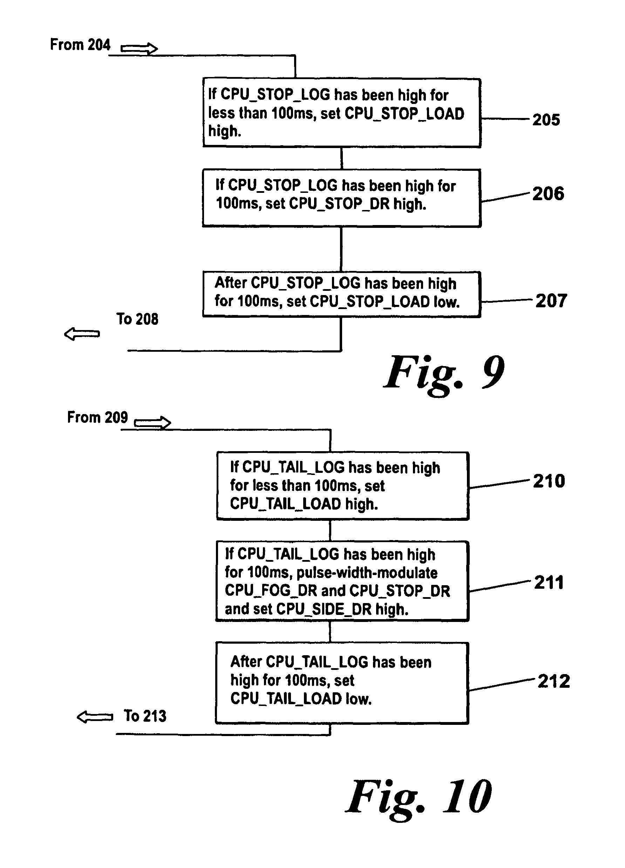

At step 204, if the CPU_STOP_LOG is high, the microcontroller carries out the sub-routine shown in the Figure 9, otherwise it proceeds to step 208. In the sub-routine shown in Figure 9, the output CPU_STOP_LOAD is set/maintained high switching in resistors R50 and R53 if CPU_STOP_LOG has been high for less than 100ms. After a set period of 100ms has passed, if CPU_STOP_LOG is still high, the microcontroller 100 sets CPU_STOP_DR high switching on the stop lamp 400, otherwise CPU_STOP_DR remains low. After 100ms, the microcontroller 100 sets CPU_STOP _LOAD low.

At step 208, the microcontroller 100 establishes whether CPU_FOG_LOG is high and, if it is, sets CPU_FOG_DR high to switch on fog lamp 500.

At step 209, the microcontroller 100 carries out the sub-routine of Figure 10 if CPU_TAIL_LOG is high, otherwise the microcontroller 100 proceeds to step 213. In the sub-routine of Figure 10, at step 210, if CPU_TAIL_LOG has been high for less than 100ms, CPU_TAIL_LOAD is set/maintained high switching in resistors R47 and R48. If CPU_TAIL_LOG remains high for a set period of 100ms, then at 212 CPU_SIDE_DR is set high turning on the side marker lamp 600 and CPU_FOG_DR and CPU_STOP_DR are pulse-width-modulated. After CPU_TAIL_LOG has been high for 100ms. CPU_TAIL_LOAD is set low.

At step 213, the microcontroller 100 sets CPU_FOG_DR low if both CPU_FOG_LOG and CPU_TAIL_LOG are low, The next step, 214, is for the microcontroller 100 to determine whether CPU_STOP_LOG and CPU_TAIL_LOG are low. If CPU_STOP_LOG and CPU_TAIL_LOG are low, CPU_STOP_DR is set low.

At step 215, the microcontroller 100 sets CPU_REV_DR high switching on reverse lamp 300 if CPU_REV_LOG is high otherwise CPU_REV_DR is set low.

At 216, the microcontroller 100 sets CPU_DI_DR_1 and CPU_DI_DR_2 high to switch on directional indicator lamp 200 if the CPU_DI_LOG is high and CP_DI_DhSTATUS_1 to CPU_DI_STATUS_4 are high (i.e. the directional indicator lamp 200 has not failed), otherwise CPU_DI_DR_1 and CPU_DI_DR_2 are set low

At 217, if any one of CPU_DI_STATUS_1 to CPU_DI_STATUS_4 goes low (this is a signal that the lamp 200 has failed), CPU_DI_OFF is set low to set the latching circuit 3.

Now referring to Figure 1, the latching circuit 3 comprises two inputs CPU_DI_OFF and CPU_DI_ON. CPU_DI_OFF is connected to the gate of FET Q8. FET Q8 controls operation of a FET Q2 which has its drain connected to the gates of FETs Q3 and Q4 of the load switching circuit 2. The gate of FET Q2 is also connected to ground via electrolytic capacitor C 17.

When the microcontroller 100 sets the voltage at input CPU_DI_OFF low, FET Q8 is switched on causing FET Q2 to be switched on and capacitor C17 to be charged. With the source of Q2 connected to ground, the gates of FETs Q3 and Q4 are grounded when Q2 is switched on, preventing FETs Q3 and Q4 from being turned on, in effect disconnecting the load from the circuit.

Even after the voltage at CPU_DI_OFF is set high, switching off FET Q8, the voltage at the gate of FET Q2 remains high due to the charged capacitor C17. Accordingly, FET Q2 remains switched on until capacitor C17 is discharged.

The latching circuit 3 is reset by the microcontroller setting the voltage at CPU_DI_ON low. Setting the voltage at CPU_DI_ON low switches on FET Q12, causing FET Q6 to be switched on. When Q6 is switched on, capacitor C17 is connected to ground, discharging the capacitor C17 resulting in FET Q2 being turned off. The voltage at CPU_DI_ON is then set high and the latching circuit 3 is now reset.

In use, an activation signal is sent to DI_INPUT is response to operation of the directional indicator controls in the vehicle by the driver. In response to the activation signal, the load is connected in parallel across the DI_INPUT by FET Q3, power is supplied to the microcontroller 100 via FETS Q4 and Q7 and signals CPU_DI_DR_1 and CPU_DI_DR_2 are sent to the units U4 to U7 by the microcontroller 100 to switch on the appropriate directional indicator LED lamp 200. The LED lamp 200 remains illuminated until the signals CPU_DI_DR_1 and CPU_DI_DR_2 are deactivated (set low) by the microcontroller 100 in response to deactivation of the activation signal at DI_INPUT. While all LED strings 1 to 4 of the LED lamp are working, the status signals CPU_DI_STATUS_1 to CPU_DI_STATUS_4 are maintained high. Accordingly, the microcontroller 100 maintains CPU_DI_OFF high and FET Q2 is switched off. The vehicle lighting will continue to work in this way until one of the LEDs in the lamp 200 fails.

If testing of the lamp 200 by the vehicle lighting circuit is carried out when the lamp 200 is active, the vehicle lighting circuit will detect current flow through the 25ohm load comparable to that of a filament bulb and therefore, determine that the LED lamp 200 is working correctly. If a high impedance diagnostic test signal is sent to DI_INPUT between periods of activation, this will cause FET Q3 to switch on connecting in the load to provide a low impedance path to ground. Because the test signal has high output impedance, the voltage level of the test signal will drop once the load is switched into the circuit. This prevents the test voltage from switching on FET Q4 and activating the LED lamp 200. In this way, the vehicle lighting circuit will see a low impedance to ground on application of the test signal when the lamp 200 is switched off, as would be expected if a working filament bulb was connected. Accordingly, the vehicle lighting circuit will determine that the LED lamp 200 is working correctly.

On failure of one of the LEDs, when the vehicle lighting is activated by a signal sent to DI_INPUT, the LED strings of the lamp 200 with the exception of the failed string will be briefly illuminated. One of the units U4 to U7 will determine that a LED string has failed and consequently, return a status signal to the microcontroller 100 indicating that an LED string has failed. As explained above, this is considered failure of the LED lamp and signals CPU_DI_DR_1 and CPU_DI_DR_2 are deactivated (set low) by the microcontroller 100 to turn off the lamp 200. The microcontroller 100 also sets the voltage at CPU_DI_OFF low, switching on FET Q2 grounding the gates of FETs Q3 and Q4, preventing these FETs from being switched on.

In this failed state of lamp 200, if the vehicle lighting circuit carries out testing, as FET Q3 is switched off, the vehicle will immediately detect an open circuit, determine that the LED lamp 200 has failed and activate the tell-tale lamp to indicate that the directional indicator lamp has failed. An open circuit will be presented regardless whether an activation signal is present at DI_INPUT because the latching circuit 3 remains in the state that it was last in during activation with FET Q2 held on by capacitor C17, preventing FET Q3 from being switched on. Accordingly, the vehicle lighting circuit will correctly determine that the LED lamp 200 has failed if it carries out testing during a directional indicator activation signal or between activation signals.

The microcontroller 100 is also switched on in response to activation signals sent to any one of REVERSE_INPUT, STOP_INPUT, TAIL_INPUT and FOG_INPUT by the vehicle lighting circuit. Switching on microcontroller 100 causes the microcontroller to set the voltage at CPU_DI_ON low, resetting latching circuit 3 if circuit 3 is latched on. As a result of this, if a directional indictor activation signal is subsequently received at DI_INPUT and one of the strings of the LED lamp 200 has failed, the directional indicator lamp 200 will be momentarily illuminated before the microcontroller 100 again determines that the directional indicator LED lamp 200 has failed and latches circuit 3. This resetting of the latching circuit 3 when the LED lamp 200 has failed will not cause the tell-tale lamp in the vehicle to be deactivated for a noticeable length of time, if at all, because the length of time an open circuit is not presented to the vehicle lighting circuit is so brief.

A further feature of the stop and tail switching circuits is that, when an activation signal is initially received at STOP_INPUT or TAIL_INPUT, the microcontroller 100 delays sending signals to the appropriate lamp(s) but initially sets the corresponding one of STOP_LOAD or TAIL_LOAD high for the set period of 100ms. This switches 28ohm load (resistors R50, R53 or R47, R48) into the circuit. Only after the activation signal at STOP_INPUT and TAIL_INPUT has been present for 100ms does the microcontroller 100 switch out the load R50, R53 or R47, R48 and activate the lamp(s).

The reason for this operation is that some tractor units detect the presence of a trailer by sending brief full power test signals to the stop lamp or tail lamps. If the vehicle lighting circuit detects a load then it assumes the trailer is present and sets the driveline characteristics of the tractor unit appropriately. In order to provide a load comparable to a filament bulb such that the tractor unit detects that the lighting cluster is present, the control system according to the invention switches in the 28 ohm load. However, these only need to be switched on during the duration of the testing signal and for this reason the 28ohm load is switched out of the circuit after the set period of 100ms.

It is also desirable to avoid illumination of the lamps by the test signal. Therefore, the lamps are switched on only after a signal has been present at STOP_INPUT or TAIL_INPUT for more than the set period of 100ms to differentiate between a test signal and a true activation signal.

The tail light function is provided as a combination of illuminating fully the side marker lamp 600 and illuminating the stop lamp 400 and fog lamp 500 at a reduced intensity by pulse-width modulating the voltage signals at CPU_STOP_DR and CPU_FOG_DR.

As will be appreciated from the description above, the vehicle lighting simulates characteristics of a filament bulb both when operational and on failure of the directional indicator lamp. Vehicle lighting circuits are designed to work with lighting clusters of filament bulbs. Accordingly, an LED lighting cluster that simulates the operational characteristics of lighting cluster of filament bulbs will be compatible with such vehicle lighting circuits.

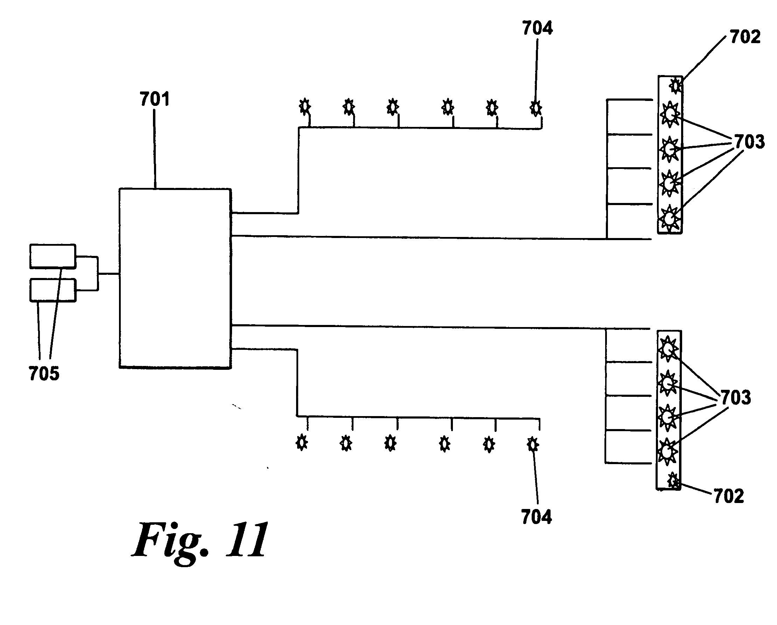

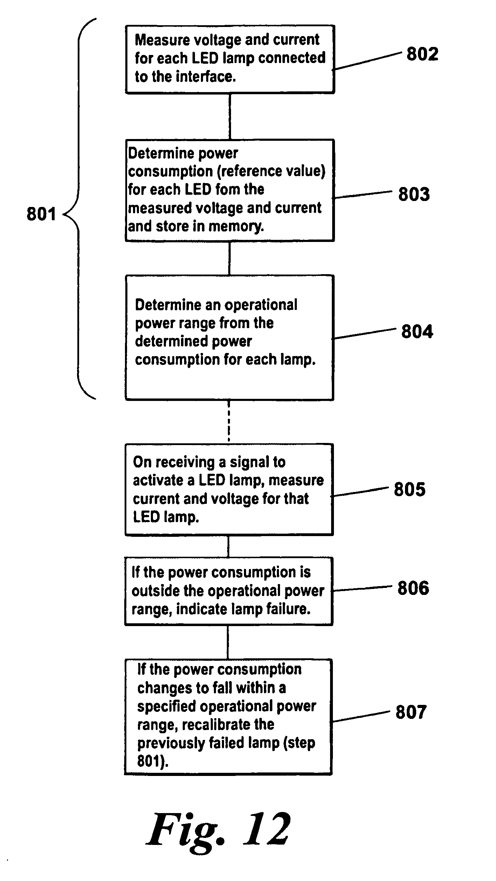

A second embodiment of the invention will now be described with reference to Figures 11 and 12. In this embodiment, an electronic control interface 701 is connected between LED lamps 702, 703 and 704 of the trailer and the vehicle lighting circuit (not shown) to provide an impedance matching circuit between the LED lamps 702, 703 and 704 and the vehicle lighting circuit. In this embodiment, lamps 702 are directional indicator lamps, lamps 703 reverse, stop and tail lamps and lamps 204 sidelights. The interface 701 is an electronic module housed within a metal box.

The interface 701 of this embodiment acts in a similar manner to the electronic control system of the first embodiment, providing an impedance matching interface between the lamps and the vehicle lighting circuit such that the lamps are correctly operated and the tell-tale light lit appropriately. However, unlike the system of the first embodiment, the interface 701 can be used with LED lamps having certain unknown operational characteristics.

The interface 701 is provided with appropriate connectors for connecting the interface 701 to the lamps 702, 703, 704 and vehicle lighting circuit. In this embodiment, Suzi connectors 705 are provided for connecting the interface 701 to the vehicle lighting circuit such that the interface 701 can be placed on the trailer. However, it will be understood that other suitable connectors could be used and the interface 701 may be designed to be located in the tractor unit, in which case the Suzi connectors will be provided for connecting to corresponding connectors coupled to the lamps 702, 703 and 704. Alternatively, the interface 701 could be designed to sit between the trailer and tractor unit.

As with the first embodiment, when the indicator lamps 702 are working correctly, the interface 701 uses the activation signals received from the vehicle lighting circuit to activate the LED lamps and presents an appropriate load to the vehicle lighting circuit when the LED lamps are working. However, on detection of failure of an indicator lamp, the interface 701 presents an open circuit to the vehicle lighting circuit. In this way, the vehicle lighting circuit correctly determines when an indicator lamp 702 has failed and activates the tell-tale lamp in the tractor unit. The interface may also provide the additional functionality of delaying activation of the stop and tail lamps for 100ms to differentiate between a test signal and a true activation signal. This can be achieved with a similar algorithm to that described with respect to the first embodiment. However, where the second embodiment differs is in how it determines whether the lamps have failed.

The first embodiment is a lighting cluster having lamps specifically designed to work correctly with the electronic control unit. However, there is currently a great variety of LED lamps available to vehicle operators and there is a need to provide a system that achieves the same functionality of the first embodiment but for lamps having unknown operational characteristics. The interface 701 achieves this by carrying out an initial calibration of the lamps upon which can be based failure detection of the lamps.

The interface 701 has electronic circuitry that provides means for calibrating the lamps 702, 703 and 704. This calibration circuitry can be activated manually by a pushbutton on the interface 701 and automatically as described hereinafter.

When the interface 701 is first assembled on a trailer, the pushbutton is pressed by the operator to cause, the interface 701 to enter a calibration mode 801. In this mode, the interface 701 measures and records in memory an initial power value (reference value) for the power consumed by each lamp 702, 703 and 704. The power can simply be determined from measuring voltage and current for each LED lamp. These steps are shown in 802 and 803 of Figure 12.

From this reference value, the interface 701 determines an acceptable operational power range for each lamp 702, 703, 704 and 705. The inventor envisages that this will simply be a percentage either side of the measured reference value. However, in another embodiment, the upper and lower limit of the operational range for a particular reference value may be stored in a look-up table and the interface 701 sets the operational power range for the LED lamp based on the values in the look-up table.

The operational power range (i.e. the size of the percentage or values in the look-up table) will be determined based on the typical characteristics of LEDs. These could be determined empirically or from information provided by the lamp manufacturers. However, it is envisaged that an appropriate operational range would be +/- ...% of the reference value.

Once the calibration is complete, the interface 701 is ready to be activated by signals from the tractor unit.

As with the first embodiment, on receiving a signal from the vehicle lighting circuit in the tractor unit to activate a directional indicator 702, the interface 701 connects in a load. The interface 701 then determines, during activation, whether the directional indicator lamp 702 has failed, as described later herein. If the directional indicator lamp has failed, the interface 701 disconnects the lamp and load and presents an open circuit to the vehicle lighting circuit. As with the first embodiment, the interface 701 may be held in this condition until the failed lamp is replaced by operation of a latching circuit.

Detection of failure and replacement of the LED lamp will now be described with reference to Figure 12. Upon activation, the interface 701 monitors the voltage and current for each lamp. If the power consumed by the lamp changes to the extent that it falls outside the operational power range, the lamp is considered to have failed. If the lamp is a directional indicator lamp 702, the circuit will then disconnect the load such that the vehicle lighting circuit will see an open circuit and determine correctly that the lamp has failed.

For the other lamps 703 and 704, the interface indicates lamp failure by illuminating external indicators (not shown) on the interface 701. The interface 701 also comprises a bus interface for communicating lamp failure to other electronic systems of the vehicle via the CAN network. In this way, the other electronic systems can respond correctly to the lamp failure and/or the lamp failure can be indicated on the instrument display of the tractor unit.

After lamp failure has been detected, the interface 701 continues to monitor the power level for the circuit connected with the lamp. For lamps that form right and left pairs, such as directional indicator lamps, the interface 701 compares the power consumption of the circuit connected with the failed lamp with that of the working lamp of the pair. If the power consumption changes to fall within the operational power range of the working lamp, the interface 701 assumes the failed lamp has been replaced with a working lamp. In the case of the directional indicators 702, the lamp reconnects the load on detection that the failed directional indicator lamp 702 has been replaced.

For the sidelights, the interface 701 makes a power calibration for a working row of sidelights and the comparison is made by comparing the measured power during an activation signal to the reference value attained for the whole row of sidelights. If the power has reduced by a pre-set amount, that typical of the power consumed by a single LED sidelight, the interface 701 determines that a sidelight has failed and indicates this to the operator (partial load detection). When the measured power returns to a value within an operational power range determined from the reference signal, then the interface 701 assumes the failed lamp has been replaced.

When the interface 701 determines that a lamp has been replaced, the interface 701 carries out an automatic calibration of the replacement lamp, measuring initial power consumption (reference value) for that lamp and storing this new reference value in memory. A new operational power range will be determined for the replacement lamp and, the interface 701, will monitor the power consumption of the lamp during activation to determine whether the lamp has failed.

It will be understood that the invention is not limited to this method of determining whether the lamp has failed but other methods are envisaged. For example, rather than comparing the power of the lamp to the power consumption of the other lamp of the pair, the measured power of the lamp circuit may be compared to the reference value for the lamp obtained before failure of the lamp. When the measured power falls within the operational power range determined from that reference value, the interface assumes that the failed lamp has been replaced with a working lamp.

At any time, the operator can press the pushbutton to force recalibration of the entire system. This may be necessary if both lamps of a pair of lamps are replaced concurrently or if an error occurs in the system.

It will be understood that the invention is not limited to the above-described embodiment but includes modifications and alterations that would be readily apparent to those skilled in the art.

## Claims

1. A system for controlling an LED lamp (200) on a vehicle comprising failure detection means for detecting failure of the LED lamp (200), the failure detection means being arranged to connect the LED lamp (200) and a load in parallel to a lighting circuit of the vehicle, which supplies power to the system for activating the LED lamp (200), when the LED lamp (200) has not failed and to present an open circuit to the lighting circuit of the vehicle on failure of the LED lamp (200), **characterized in that** the failure detection means comprising a latching circuit (3) that can be switched between two states when the LED lamp (200) is activated, one of the states preventing the load and LED lamp (200) being connected to the lighting circuit of the vehicle and the latching circuit (3) being arranged to be switched to this state on detection of failure of the LED lamp (200), when the LED lamp (200) is deactivated and no power is supplied to the system, the latching circuit (3) remains in the state it was in during activation.

2. Vehicle lighting comprising an LED lamp (200) and a system for controlling the LED lamp (200) according to claim 1.

3. Vehicle lighting according to claim 2, wherein the LED lamp (200) and load draw a current comparable to that of a filament bulb and preferably the load has a resistance of 25 ohms.

4. Vehicle lighting according to claim 2 or claim 3, wherein failure of the LED lamp (200) is when any one of the LEDs (D33 to D53) of the lamp (200) fail.

5. Vehicle lighting according to claim 2 or claim 3, wherein failure of the LED lamp (200) is when two or more LEDs (D33 to D53) of the lamp fail.

6. Vehicle lighting according to any one of claims 2 to 5, wherein the LEDs (D33 to D53) of the LED lamp (200) are grouped together into multiple groups and on detection of failure of one of the LEDs of a group, the vehicle lighting deactivates all LEDs in that group and two or more drive signals may be used to activate the LEDs, each drive signal activating a group of LEDs.

7. Vehicle lighting according to claim 6, wherein the LED lamp (200) comprises parallel strings of LEDS and each group of LEDs comprises one or more LED strings.

8. Vehicle lighting according to any one of claims 2 to 7, wherein providing an open circuit consists of providing a break in the circuit.

9. Vehicle lighting according to any one of claims 2 to 8, wherein providing an open circuit comprises providing an impedance above 10000ohms.

10. Vehicle lighting according to claim 2, wherein switching of the latching circuit (3) is carried out by at least one transistor (Q2).

11. Vehicle lighting according to any one of claims 2 to 10, wherein the failure detection means comprises a microcontroller (100) that processes status signals received from the LED lamp (200) and, in response to a status signal indicating lamp failure, causes an open circuit to be presented to the vehicle lighting circuit.

12. Vehicle lighting according to claim 11, wherein, in response to the status signal indicating lamp failure, the microcontroller (100) causes the latching circuit (3) to switch to the state preventing the load and LED lamp being connected to the lighting circuit.

13. Vehicle lighting according to any one of claims 2 to 12, wherein the LED lamp (200) is a directional indicator for a vehicle.

14. Vehicle lighting according to any one of claims 2 to 13, wherein the vehicle lighting is a vehicle lighting cluster comprising a plurality of LED lamps (200, 300, 400, 500, 600).

## Patentansprüche

1. System zur Steuerung einer LED-Lampe (200) an einem Fahrzeug, das Ausfallerfassungsmittel aufweist, um einen Ausfall der LED-Lampe (200) zu erfassen, wobei die Ausfallerfassungsmittel angeordnet sind, um die LED-Lampe (200) und eine Last parallel an einer Beleuchtungsschaltung des Fahrzeugs anzuschließen, die das System mit Strom zur Aktivierung der LED-Lampe (200) versorgt, wenn die LED-Lampe (200) nicht ausgefallen ist und um die Beleuchtungsschaltung des Fahrzeugs bei einem Ausfall der LED-Lampe (200) eine offene Schaltung bereitzustellen
**dadurch gekennzeichnet, dass**
das Ausfallerfassungsmittel einen Verriegelungsschaltung (3) umfasst, die zwischen zwei Zuständen umgeschaltet werden kann, wenn die LED-Lampe (200) aktiviert ist, wobei einer der Zustände verhindert, dass die Last und die LED-Lampe (200) an deie Beleuchtungsschaltung des Fahrzeugs angeschlossen sind, wobei die Verriegelungsschaltung (3) angeordnet ist, um bei der Erfassung des Ausfalls der LED (200) in diesen Zustand umzuschalten, wobei, wenn die LED-Lampe (200) desaktiviert wird und das System nicht mit Strom versorgt wird, wobei die Verriegelungsschaltung (3) in dem Zustand bleibt, in dem sie sich während der Aktivierung befand.

2. Fahrzeugbeleuchtung, die eine LED-Lampe (200) und ein System zur Steuerung der LED-Lampe (200) gemäß Anspruch 1 aufweist.

3. Fahrzeugbeleuchtung gemäß Anspruch 2, wobei die LED-Lampe (200) und Last einen Strom ziehen, der der einer Glühlampe vergleichbar ist, und die Last vorzugsweise einen Widerstand von 25 Ohm aufweist.

4. Fahrzeugbeleuchtung gemäß Anspruch 2 oder 3, wobei der Ausfall der LED-Lampe (200) auftritt, wenn eine der LEDs (D33 bis D53) der Lampe (200) ausfällt.

5. Fahrzeugbeleuchtung gemäß Anspruch 2 oder 3, wobei der Ausfall der LED-Lampe (200) auftritt, wenn zwei oder mehr der LEDs (D33 bis D53) der Lampe ausfallen.

6. Fahrzeugbeleuchtung gemäß einem der Ansprüche 2 bis 5, wobei die LEDs (D33 bis D53) der LED-Lampe (200) in mehreren Gruppen gruppiert sind und beim Erfassen des Ausfalls einer der LEDs in einer Gruppe die Fahrzeugbeleuchtung alle LEDs in dieser Gruppe ausschaltet und zwei oder mehr Steuersignale verwendet werden können, um die LEDs zu aktivieren, wobei jedes Steuersignal eine LED-Gruppe aktiviert.

7. Fahrzeugbeleuchtung gemäß Anspruch 6, wobei die LED-Lampe (200) parallele Ketten von LEDs aufweist und jede LED-Gruppe eine oder mehrere LED-Ketten aufweist.

8. Fahrzeugbeleuchtung gemäß einem der Ansprüche 2 bis 7, wobei das Bereitstellen einer offenen Schaltung durch eine Unterbrechung in der Schaltung vorgesehen wird.

9. Fahrzeugbeleuchtung gemäß einem der Ansprüche 2 bis 8, wobei das Bereitstellen einer offenen Schaltung durch eine Impedanz über 10.000 Ohm vorgesehen wird.

10. Fahrzeugbeleuchtung gemäß Anspruch 2, wobei das Umschalten der Verriegelungsschaltung (3) von wenigstens einem Transistor (Q2) durchgeführt wird.

11. Fahrzeugbeleuchtung gemäß einem der Ansprüche 2 bis 10, wobei das Ausfallerfassungsmittel einen Mikrocontroller (100) umfasst, der Statussignale verarbeitet, die von der LED-Lampe (200) empfangen werden, und als Reaktion auf ein Statussignal, das einen Lampenausfall anzeigt, veranlasst, dass der Fahrzeugbeleuchtungsschaltung eine offene Schaltung angezeigt wird.

12. Fahrzeugbeleuchtung gemäß Anspruch 11, wobei in Reaktion auf das einen Lampenausfall anzeigende Statussignal der Mikrocontroller (100) veranlasst, dass die Verriegelungsschaltung (3) in den Zustand wechselt, der unterbindet, dass die Last und die LED-Lampe an die Beleuchtungsschaltung angeschlossen sind.

13. Fahrzeugbeleuchtung gemäß einem der Anspruche 2 bis 12, wobei die LED-Lampe (200) ein Richtungsanzeiger für ein Fahrzeug ist.

14. Fahrzeugbeleuchtung gemäß einem der Ansprüche 2 bis 13, wobei die Fahrzeugbeleuchtung ein Fahrzeugbeleuchtungscluster ist, das eine Vielzahl an LED-Lampen (200, 300, 400, 500, 600) umfasst.

## Revendications

1. Système de commande d'une lampe à DEL (200) sur un véhicule comprenant des moyens de détection de panne pour détecter une panne de la lampe à DEL (200), les moyens de détection de panne étant agencés pour connecter la lampe à DEL (200) et une charge en parallèle à un circuit d'éclairage du véhicule, qui alimente le système pour activer la lampe à DEL (200), lorsque la lampe à DEL (200) n'est pas en panne et pour présenter un circuit ouvert au circuit d'éclairage du véhicule lors d'une panne de la lampe à DEL (200), **caractérisé en ce que** les moyens de détection de panne comprennent un circuit de verrouillage (3) qui peut être commuté entre deux états lorsque la lampe à DEL (200) est activée, l'un des états empêchant la connexion de la charge et de la lampe à DEL (200) au circuit d'éclairage du véhicule, et le circuit de verrouillage (3) étant agencé pour être commuté dans cet état lors de la détection d'une panne de la lampe à DEL (200), lorsque la lampe à DEL (200) est désactivée et que le système n'est pas alimenté, le circuit de verrouillage (3) reste dans l'état dans lequel il était pendant l'activation.

2. Eclairage de véhicule comprenant une lampe à DEL (200) et un système pour commander la lampe à DEL (200) selon la revendication 1.

3. Eclairage de véhicule selon la revendication 2, dans lequel la lampe à DEL (200) et la charge prélèvent un courant comparable à celui d'une ampoule à incandescence et, de préférence, la charge a une résistance de 25 ohms.

4. Eclairage de véhicule selon la revendication 2 ou la revendication 3, dans lequel la lampe à DEL (200) est en panne lorsque l'une des DEL (D33 à D53) de la lampe (200) tombe en panne.

5. Eclairage de véhicule selon la revendication 2 ou la revendication 3, dans lequel la lampe à DEL (200) est en panne lorsque deux DEL (D33 à D53) ou plus de la lampe tombent en panne.

6. Eclairage de véhicule selon l'une quelconque des revendications 2 à 5, dans lequel les DEL (D33 à D53) de la lampe à DEL (200) sont regroupées en de multiples groupes et, lors de la détection d'une panne de l'une des DEL d'un groupe, l'éclairage de véhicule désactive toutes les DEL de ce groupe et deux signaux de commande ou plus peuvent être utilisés pour activer les DEL, chaque signal de commande activant un groupe de DEL.

7. Eclairage de véhicule selon la revendication 6, dans lequel la lampe à DEL (200) comprend des chaînes parallèles de DEL et chaque groupe de DEL comprend une ou plusieurs chaînes de DEL.

8. Eclairage de véhicule selon l'une quelconque des revendications 2 à 7, dans lequel la réalisation d'un circuit ouvert consiste à réaliser une coupure dans le circuit.

9. Eclairage de véhicule selon l'une quelconque des revendications 2 à 8, dans lequel la réalisation d'un circuit ouvert comprend la réalisation d'une impédance supérieure à 10 000 ohms.

10. Eclairage de véhicule selon la revendication 2, dans lequel la commutation du circuit de verrouillage (3) est effectuée par au moins un transistor (Q2).

11. Eclairage de véhicule selon l'une quelconque des revendications 2 à 10, dans lequel les moyens de détection de panne comprennent un microcontrôleur (100) qui traite les signaux d'état reçus de la lampe à DEL (200), et, en réponse à un signal d'état indiquant une panne de la lampe, provoque la présentation d'un circuit ouvert au circuit d'éclairage de véhicule.

12. Eclairage de véhicule selon la revendication 11, dans lequel, en réponse au signal d'état indiquant une panne de la lampe, le microcontrôleur (100) amène le circuit de verrouillage (3) à commuter vers l'état empêchant la connexion de la charge et de la lampe à DEL au circuit d'éclairage.

13. Eclairage de véhicule selon l'une quelconque des revendications 2 à 12, dans lequel la lampe à DEL (200) est un indicateur de direction pour un véhicule.

14. Eclairage de véhicule selon l'une quelconque des revendications 2 à 13, dans lequel l'éclairage de véhicule est un faisceau d'éclairage de véhicule comprenant une pluralité de lampes à DEL (200, 300, 400, 500, 600).
